(19) Europäisches Patentamt
European Patent Office
Office européen des brevets

(11) Publication number: **0 127 232**
**B1**

(12) **EUROPEAN PATENT SPECIFICATION**

(45) Date of publication of patent specification: **02.09.87**

(51) Int. Cl.$^4$: **B 65 G 47/54,** B 07 C 5/36

(21) Application number: **84200698.3**

(22) Date of filing: **15.05.84**

(54) **Selection system for flat articles, particularly metal sheets of different sizes coming from a shearing machine.**

(30) Priority: **20.05.83 IT 2119783**

(43) Date of publication of application:
**05.12.84 Bulletin 84/49**

(45) Publication of the grant of the patent:
**02.09.87 Bulletin 87/36**

(84) Designated Contracting States:
**AT BE CH DE FR GB IT LI LU NL SE**

(56) References cited:
**DE-A-2 555 192**
**FR-A-1 079 628**
**GB-A-1 053 712**
**US-A-2 360 661**
**US-A-2 497 874**
**US-A-2 951 575**

(73) Proprietor: **SALVAGNINI TRANSFERICA S.p.A.**
**Strada della Favorita**
**I-36040 Sarego (Vicenza) (IT)**

(72) Inventor: **Salvagnini, Guido**
**Via dalla Prà**
**I-36040 Sarego Vicenza (IT)**

(74) Representative: **Marchi, Massimo et al**
**c/o Marchi & Mittler s.r.l. Viale Lombardia 20**
**I-20131 Milano (IT)**

**EP 0 127 232 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a selection system for flat articles, particularly for metal sheets of different sizes coming from a shearing machine.

There are known shearing machines which cut a metal sheet in sheets having the same size and others which, in order to reduce the swarf, cut in sheets of very different sizes.

In the first case the piling of the cut sheets is made in a very simple way by causing each sheet to fall and then to slide on an inclinded plane downstream the shearing machine to a kind of hopper, which directs it towards the top of a pile. From time to time the hopper is adapted to size of the pile which one intends to form and for a certain period one can cut only sheets of that size.

On the contrary, in the second case, the problem becomes complicated and difficult to solve.

One solution has been described in U.S.A.—2.360.661 (on which the prior art portion of claim 1 is based). This document discloses a table for discharging an article from a roller conveyor having a plurality of transverse openings therein comprising a longitudinal member on each side of the conveyor, means located in said openings for connecting said members, a plurality of transverse rollers supported by said means, the top of said last named rollers normally being below the top of the conveyor rollers, each of said members being pivotally mounted and movable with respect to said conveyor, and means for selectively moving each of said members about the pivot of the other member to raise said transverse rollers above said conveyor rollers and discharge said article from said conveyor.

An object of the present invention is to provide an improved system to solve the problem of the piling of metal sheets of different size coming from a shearing machine, or more in general, of any other kind of flat articles.

According to this invention this object is attained by employing a selection system, comprising a plurality of selectors which are placed along an advancement path of the articles and can be worked alternately to deviate selected articles from said path to respective collection places, each of said selectors being constituted by a structure which can be moved from a rest position, where said structure does not interfere with the advancement of said articles along said path, to an upper discharge position where said structure, after having lifted said engaged articles, allow their conveyance towards said collection places, characterized in that said rest position is an upper rest position, said structure being a rake structure with L-shaped prongs, which is arranged transversally with respect to the advancement path of the articles, said structure being moved from said upper rest position to a lower pick up position, where said prongs stop the advancement of the articles, and then to said upper discharge position.

It is self-evident that a plurality of thus formed selectors allows to select and to convey the different articles towards one or the other of the collection places according to the different size of said articles. All the articles having the same size reach the same collection place, where it can be provided an hopper having a fixed size, which provides their piling, separately from the articles having different sizes.

Alternately it can be also provided the grouping of the articles according to their destination instead of their size.

Two embodiments are shown by way of non-limitative examples in the enclosed drawings, in which:

Fig. 1 shows the general diagram of the selection system according to this invention, when it is used for selecting metal sheets of different sizes coming from a shearing machine;

Fig. 2 shows the construction details of a first example of selector comprised in said system, seen in pick up position, from left with respect to Fig. 1;

Fig. 3 shows a section of said selector along the line III—III of Fig. 2;

Fig. 4 shows said selector according to the same view of Fig. 2, excepting that the rake structure is arranged in discharge position, coinciding with the rest-one;

Fig. 5 shows view of a second example of selector according to the invention in pick up position as shown in Fig. 2;

Fig. 6 shows the selector of Fig. 5 in top plan view;

Fig. 7 shows enlarged details of the selector of Figs. 5 and 6, still laterally seen in pick up position as shown in Fig. 5 but with sectioned parts;

Fig. 8 is a view similar to that of Fig. 7 but with the selector in discharge position;

Fig. 9 shows the selector of Figs. 5—8 as cross-sectioned from left with respect to Figs. 5 and 6.

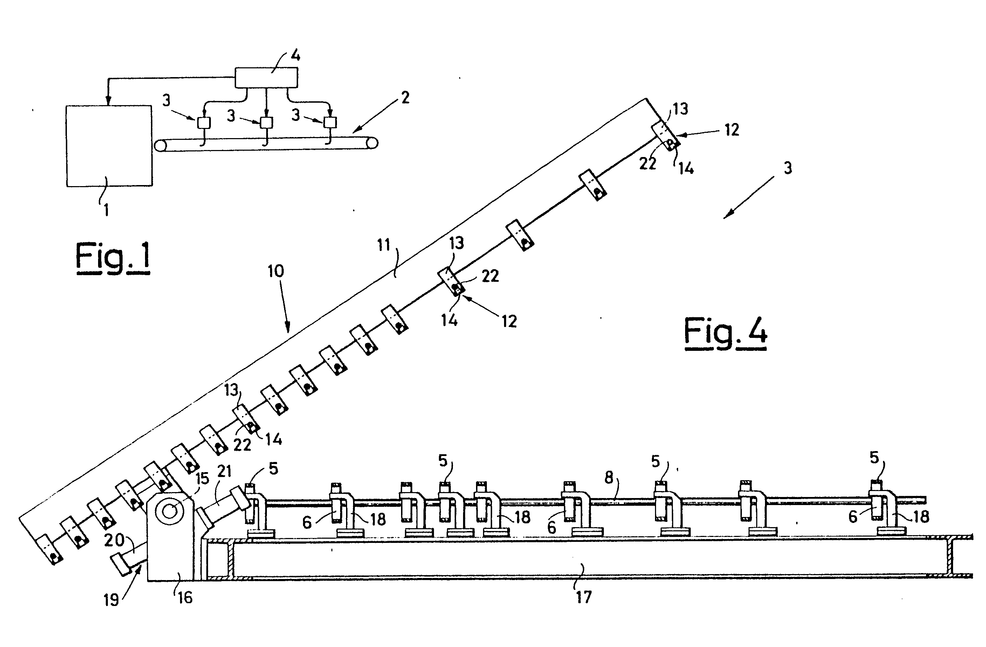

Fig. 1 shows the whole shearing machine 1, an output conveyor 2 and a selection system formed by a plurality of selectors 3 arranged along the conveyor 2. Furthermore it is shown a control program unit 4, which causes the correct and correlate working of the shearing machine 1 and of the selection system for the cut sheets of different sizes by the former and their sorting towards different collection and piling places according to their sizes, by the latter.

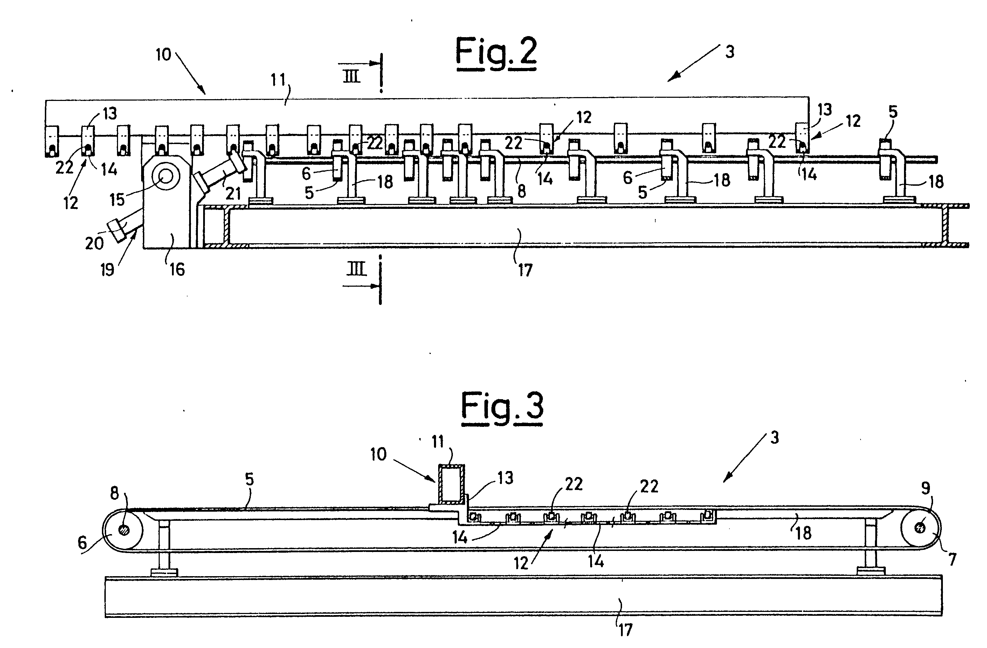

A first embodiment of said selectors 3 in shown in details in Figs. 2, 3 and 4, where it is also shown that the conveyor 2 is constituted by a plurality of adjacent belts 5 stretched between respective pairs of pulleys 6 and 7 connected by respective common shafts 8 and 9, one of which is motorized.

The selector comprises a movable rake structure 10, which is constituted by a beam 11 arranged transversally with respect to the conveyor 2 and by a plurality of projecting prongs 12, each L-shaped, with a first portion 13 which extends perpendicularly from the beam 11 and a second perpendicularly turned portion 14 which is directed towards the inlet of the conveyor 2, i.e. towards the shearing 1; as shown in Fig. 3, said turned portion 14 carries a plurality of small idle wheels 22. The beam 11 is pivoted in 15 on a support 16 fixed in its turn to a supporting frame 17. This latter supports also a plurality of supporting structures 18 for each conveyor belt 5.

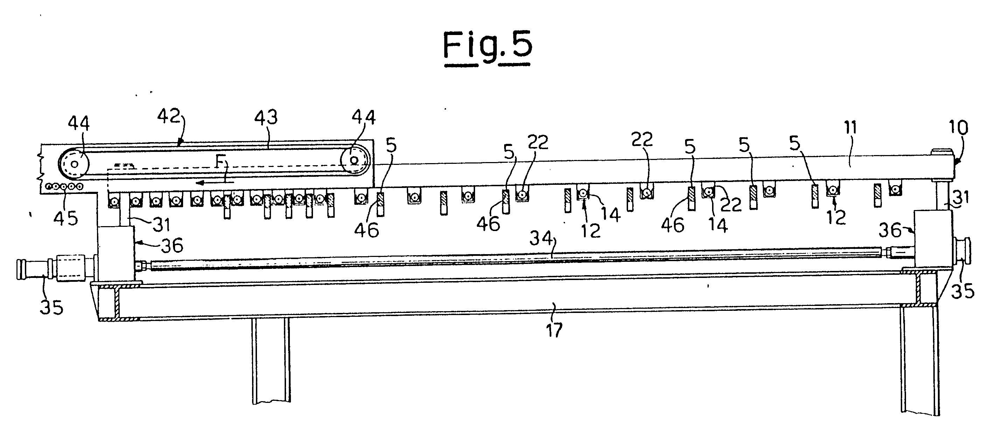

A working device 19, for example of the kind having two hydraulic opposite cylinder 20 and 21 with connecting rack mashing with a pinion keyed on the rotation pin 15, allows the rotation of the rake structure 10 between the horizontal pick up position of the Figs. 2 and 3 and the inclinded rest position or discharge position of Fig. 4.

In the first position the turned portions 14 of the prongs 12 are inserted between each of the belts 5 of the conveyor 2, slightly under the resting plane defined by them. In this position the perpendicular portions 13 of the prongs prevent the advancement of the metal sheets along the conveyor 2, causing them to stop against the same prongs.

In the second position the prongs 12 are, on the contrary, lifted with respect to the belts 5, so as not to interfere with the advancement of the arriving sheets and to define with their turned portions 14 an inclined sliding plane for the sheets previously stopped and then lifted. In this position the small wheels 22 make easy the sliding of the sheets and their subsequent discharge in a collection place, which is preferably a piling hopper.

It results the following way of working of the selector 3 and, in general, of the selecting system with more selectors placed at the outlet of the shearing machine. Whilst a selector has its own rake structure 10 arranged in the inclinded rest position of Fig. 4, the sheets carried by the belts 5 can pass freely under the prongs 12. This condition lasts until, in correspondence with the cut by the shearing machine 1 of a sheet having a given size, the control unit 4 gives to the working device 19 of that selector an order for the rotation of the rake structure 10 from the rest inclinded position of Fig. 4 to the horizontal one of Fig. 2. At that time the arriving sheet stops against the vertical portions 13 of the prongs 12, being so stopped and catched. Immediately after, the same control unit 4 orders the return of the rake structure 10 to the inclinded position of Fig. 4, and the catched sheet is at first lifted and then caused to slide along the inclined plane defined by the turned portion 14 of the prongs 12 with relative small idle wheels 22. The catched and lifted sheet can thus reach the collection place for which it is destined.

By repeating this operation, at the right times, for the other selectors, is thus possible to sort the different metal sheets towards the corresponding collection places according to their different sizes (or to their destinations). All the sheets of the same size (or of the same destination) can thus be collected and stacked altogether and separately from the sheets having other sizes (or destinations).

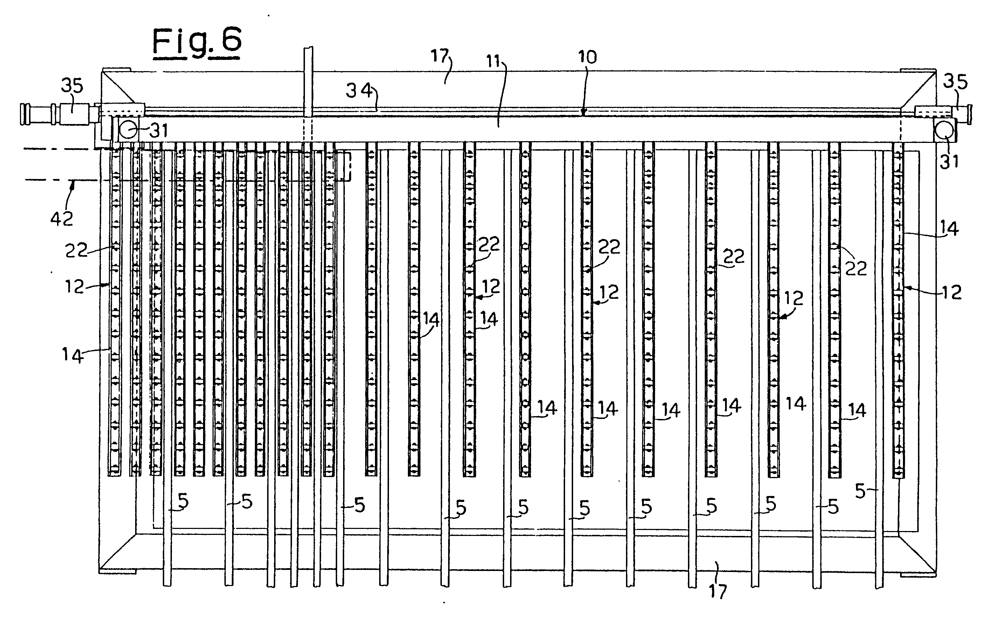

Substantially similar is the construction and the working principle of the second example of selector according to this invention, which is shown in Figs. 5—9.

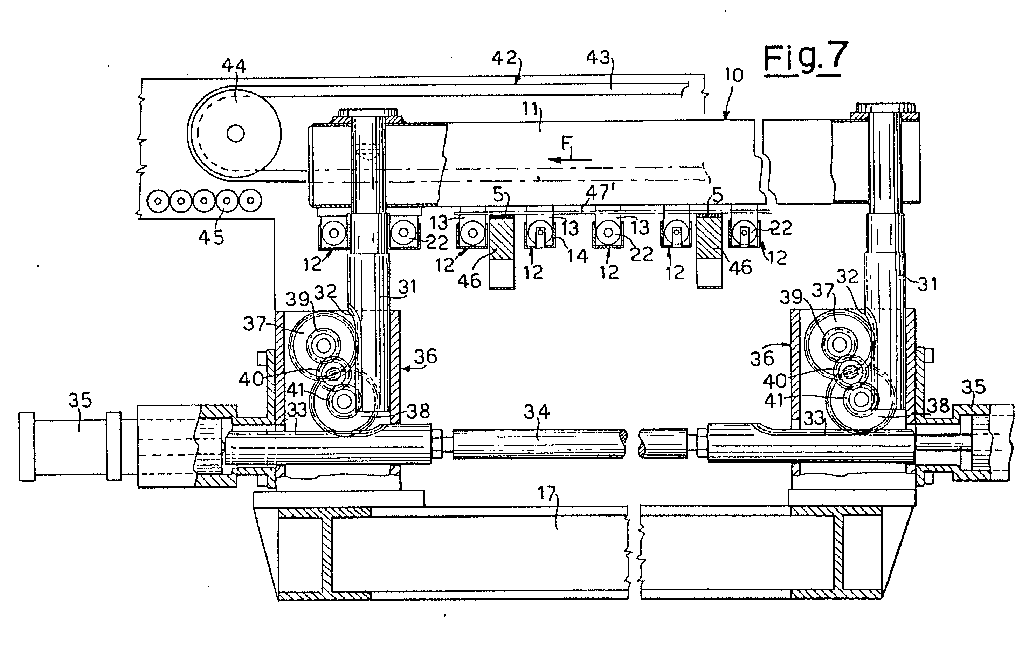

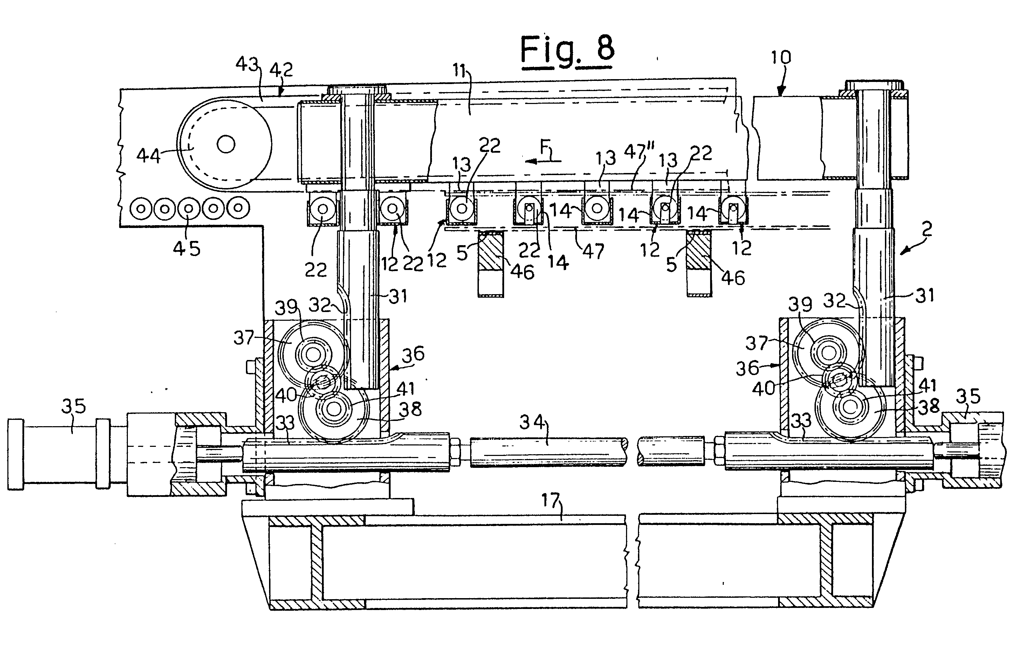

In said selector, where the same reference numbers are used to indicate parts corresponding to those of the selector of Figs. 2—4, the only substantially difference is that the beam 11, rather than rotate, can be translated vertically among different horizontal positions, respectively the pick up (Fig. 7) the rest and the discharge position (Fig. 8).

To this purpose the beam 11 of the rake structure 10 is fixed to a pair of end pillars 31, each of them including a rack portion 32 connected mechanically by means of a gear box 36 to a corresponding rack portion 33 of a common translatable shaft 34 which is controlled by two hydraulic cylinders 35. As shown in Figs. 7 and 8, each gear box 36 comprises two pinions 37 and 38 respectively engaged with the rack portion 32 and 33 and a train of idle gears 39, 40 and 41 for the operating connection of the two above mentioned pinions.

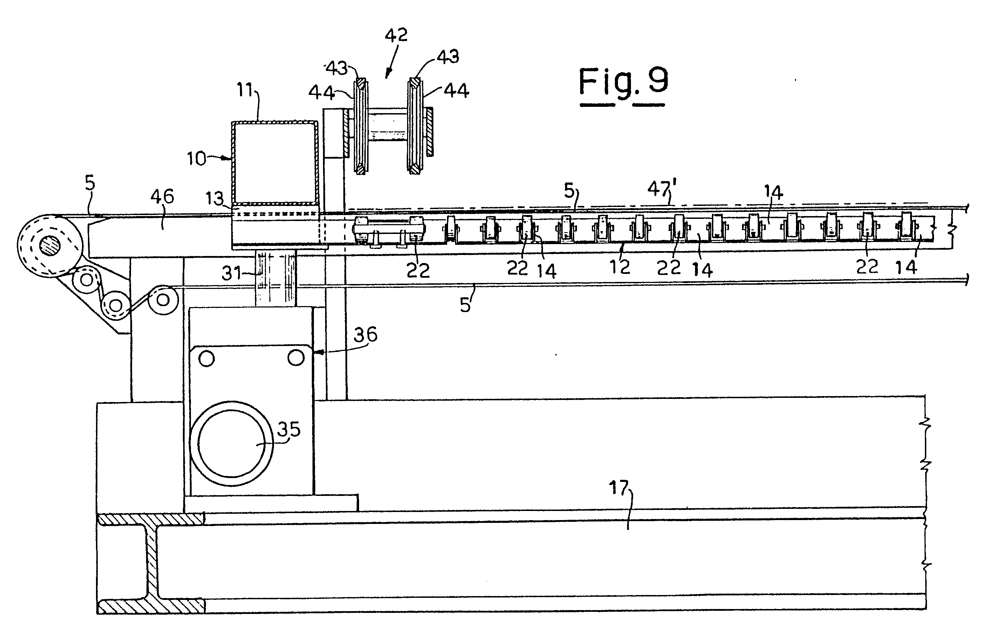

With the rake structure 10 cooperates furthermore a belt conveyor 42, which is placed in a fixed position above the structure 10 (Figs. 5 and 9) and comprises substantially two parallel belts 43 with relative end pulleys 44.

In rest position, the rake structure 10 is arranged as shown in Fig. 8, that is with the horizontal prongs 12 lifted with respect to the belts 5 (shown on support ledges 46), so as not to interfere with the advancement of the metal sheets (47) along the path defined by the same belts. At the same time the turned portions 14 define, with their small idle wheels 22, a horizontal support plane for the previously picked up sheet (47''), which is still engaged with the lower portion of the belts 43 (movable along the arrow F) for its subsequent discharge towards a collection place, for example a piling hopper. To this purpose, small idle wheels 45 are placed at the outlet of the rake structure 10 to act in the same supporting way as the small wheels 22.

In pick up position, on the contrary, the rake structure 10, is arranged as shown in Fig. 7, i.e. with the horizontal portions 14 of the prongs 12 introduced between the belts 5, slightly under the support base defined by them, and the vertical portions 13 of the same prongs placed in such a position to stop the advancement of the metal sheet along the path defined by the belts 5.

When the rake structure 10 is in the latter position, the selected metal sheet (47') undergoes a stop equivalent to a pick up from the normal flow of advancement. On the other hand the lifting of said structure to the position of Fig. 8 allows again the free advancement of the sheets (47') along the conveyor 2 and the discharge of the picked up sheet (47'') towards a collection place by engagement of the conveyor 42 with the suitable cooperation of the idle supporting wheels 22 and 45.

Or course, suitable conveying and supporting devices will follow the conveyor 42 and the small wheels 45 for the conveyance of the selected sheet up to the desired collection place.

**Claims**

1. Selection system for flat articles, particularly for metal sheets of different sizes coming from a shearing machine, comprising a plurality of selectors (3) which are arranged along an advancement path of the articles and can be worked alternately to deviate selected articles from the said path to respective collection places, each of selectors (3) being constituted by a structure (10) which can be moved from a rest position, where said structure (10) does not interfere with the advancement of said articles along said path, to an upper discharge position where said structure (10), after having lifted said engaged articles, allow their conveyance towards said collection places, characterized in that said rest position is an upper rest position, said structure being a rake structure with L-shaped prongs (12), which is arranged transversally with resepct to the advancement path of the articles, said structure being moved from said upper rest position to a lower pick up position, where said prongs (12) stop the advancement of the articles, and then to said upper discharge position.

2. Selection system according to claim 1, characterized in that the rest and discharge positions coincide.

3. Selection system according to claim 1, characterized in that said rake structure (10) is consituted by a beam (11) arranged transversally with respect to said path and by prongs (12), integral to it, constituted by a first portion (13) which extends perpendicularly from said beam (11) and by a second portion (14) perpendicularly turned in opposite direction with respect to the advancement direction of the articles along said path.

4. Selection system according to claim 3, characterized in that said turned portions (14) of the prongs (12) are provided with small idle wheels (22) to make easy the slip of the articles along the plane defined by them.

5. Selection system according to claim 3, characterized in that said rake structure (10) pivots around a fixed axis (15) perpendicular with respect to said advancement path, to move from said pick up position in which turned portions (14) of the prongs (12) define a horizontal plane, in said rest and discharge positions, in which said turned portions (14) of the prongs (12) define an inclinded plane declining towards said collection places.

6. Selection system according to claim 3, characterized in that said rake structure (10) is vertically translatable from said pick up position to said rest and discharge positions, in all the above mentioned positions said turned portions (14) of the prongs (12) defining horizontal support planes for the articles.

7. Selection system according to claim 6, characterized in that it comprises a belt conveyor (42) which is placed in a fixed position above said rake structure (10) and cooperate with the latter to convey the picked up articles towards said collection places when said rake structure (10) is lifted in discharge position.

**Patentansprüche**

1. Selektionssystem für flache Gegenstände, insbesondere für Metrallbleche verschiedener Größen, die aus einer Schneidemaschine kommen, welches eine Vielzahl von Selektoren (3) aufweist, die entlang eines Transportweges der Gegenstände angeordnet sind und abwechselnd derart bedient werden können, daß sie ausgewählte Gegenstände vom Transportweg zu jeweiligen Sammelplätzen leiten, wobei jeder dieser Selektoren (3) aus einer Vorrichtung (10) besteht, die man aus einer Ruheposition, in der diese Vorrichtung (10) die fortlaufende Bförderung der gegenstände auf dem Transportweg nicht behindern kann, in eine höhere Abgabeposition bewegen kann, wo diese Vorrichtung (10), nachdem sie die betreffenden Gegenstände hochgehoben hat, ihre Beförderung zu den Sammelplätzen gestattet, dadurch gekennzeichnet, daß es sich bei der Ruheposition um eine obere Ruheposition handelt, wobei diese Vorrichtung ein Rechen Mit L-förmigen Zinken (12) ist, welcher transversal zu dem Transportweg der Gegenstände angeordnet ist und wobei diese Vorrichtung von der oberen Ruheposition zu einer unteren Aufnahmeposition, in der die Zinken (12) die Beförderung der Gegenstände stoppen, und schließlich in die obere Abgabeposition bewegt wird.

2. Selektionssystem nach Anspruch 1, dadruch gekennzeichnet, daß die Ruheposition und die Abgabeposition zusammenfallen.

3. Selektionssystem nach Anspruch 1, dadurch gekennzeichnet, daß der Rechen (10) aus einem Balken (11), der transversal zum Transportweg angeordnet ist, und aus fest damit verbundenen Zinken (12) besteht, wobei die Zinken aus einem ersten, senkrecht zum Balken (11) angeordneten Teil (13) und aus einem zweiten, rechtwinklig abgebogenen und der Beförderungsrichtung der Gegenstände auf dem Transportweg entgegengerichteten Teil (14) besteht.

4. Selektionssystem nach Anspruch 3, dadurch gekennzeichnet, daß die abgebogenen Teile (14) der Zinken (12) mit kleinen Leerlaufrädchen (22) ausgestattet ist, um das Gleiten der Gegenstände auf der durch sie definierten Fläche zu erleichtern.

5. Selektionssystem nach Anspruch 3, dadurch gekennzeichnet, daß der Rechen (10) um eine festetehende Achse (15) senkrecht zum Transportweg schwenkbar ist, um sich von der Aufnahmeposition, in der die abgebogenen Teile (14) der Zinken (12) eine horizontale Ebene bilden, in die Ruheund Abgabeposition, in der die abgebogenen Teile (14) der Zinken (12) eine zu den Sammelplätzen hin geneigte Ebene bilden, bewegen zu können.

6. Selektionssystem nach Anspruch 3, dadurch gekennzeichnet, daß der Rechen (10) von der Aufnahmeposition zur Ruheund Abgabeposition vertikal bewegbar ist, wobei in allen obengenannten Positionen die abgebogenen Teile (14) der Zinken (12) waagerechte Stützebenen für die Gegenstände bilden.

7. Selektionssystem nach Anspruch 6, dadurch gekennzeichnet, daß es ein Förderband (42) aufweist, welches sich in fester Position oberhalb des Rechens (10) befindet und welches in Zusammenarbeit mit letzterem die aufgenommenen Gegenstände zu den Sammelplätzen transportiert, wenn der Rechen (10) in die Abgabeposition hochbewegt wird.

**Revendications**

1. Système de sélection pour les articles plats, en particulier pour des tôles métalliques de différentes dimensions venant d'une cisaille, comportant une pluralité de sélecteurs (3) qui sont disposés la long d'un chemin d'avancement des articles et que l'on peut faire travaillller alternativement pour dévier des articles sélectionnés, depuis ledit chemin, vers des emplacements respectifs de collecte, chacun desdits sélecteures (3) étant constitué par une structure (10) qui peut se déplacer depuis une position de repos, dans laquelle ladite structure (10) n'interfère pas avec l'avancement desdits articles le long dudit chemin, jusqu'à une position supérieure d'évacuation dans laquelle ladite structure (10) après avoir soulevé lesdits articles venus au contact, permet leur transport en direction desdits emplacements de collecte, caractérisé en ce que ladite position de repos est une position supérieure de repos, ladite structure étant une structure en râteau avec des dents en forme de L (12) disposée transversalement par rapport au chemin d'avancement des articles, ladite structure se déplaçant, depuis ladite position supérieure de repos, jusqu'à une position inférieure de ramassage, dans laquelle lesdites dents (12) arrêtent l'avancement des articles, puis jusqu'à ladite position supérieure d'évacuation.

2. Système de sélection selon la revendication 1, caractérisé en ce que la position de repos et la position d'évacuation coincident.

3. Système de sélection selon la revendication 1, caractérisé en ce que ladite structure en râteau (10) est constituée par une poutre (11) disposée transversalement par rapport audit chemin et par des dents (12), d'une pièce avec la poutre, constitutées par une première portion (13) qui s'étend perpendicularement à ladite poutre (11) et par une seconde portion (14) rabattue perpendiculairement dans la direction opposée à la direction d'avancement des articles le long dudit chemin.

4. Système de sélection selon la revendication 3, caractérisé en ce que lesdites portions rabattues (14) des dents (12) comportent des petites roues folles (22) pour faciliter le glissement des articles le long du plan qu'elles définissent.

5. Système de sélection selon la revendication 3, caractérisé en ce que ladite structure en râteau (10) pivote autour d'un axe fixe (15) perpendiculaire audit chemin d'avancement, pour se déplacer depuis ladite position de ramassage, dans laquelle les portions rabattues (14) des dents (12) définissent un plan horizontal, jusqu'auxdites positions de repos et d'évacuation, dans lesquelles les portions rabattues (14) des dents (12) définissent un plan incliné qui va en s'abaissant en direction desdites emplacements de collecte.

6. Syste6me de sélection selon la revendication 3, caractérisé en ce que ladite structure en râteau (10) peut se déplacer verticalement depuis ladite position de ramassage jusqu'aux dites positions de repos et d'évacuation, lesdits portions rabattues (14) des dents (12) définissant des plans horizontaux supports pour les articles, dans toutes les positions mentionnées ci-dessus.

7. Système de sélection selon la revendication 6, caractérisé en ce qu'il comporte un transporteur à courroie (42) qui est placé en position fixe au-dessus de ladite structure en râteau (10) et qui collabore avec cette dernière pour transporter les articles ramassés en direction desdits emplacement de collecte lorsque ladite structure en râteau (10) est soulevée en position d'évacuation.

Fig.1
Fig.4
1
2
3
4
5
6
8
10
11
12
13
14
15
16
17
18
19
20
21
22

Fig.2
Fig.3
III
III
3
5
6
7
8
9
10
11
12
13
14
15
16
17
18
19
20
21
22

Fig.5
10
31
35
36
11
12
5
5
22
14
5
46
22
14
12
34
17
22
5
46
5
46
44
43
F
42
31
36
44
45
35

Fig.6
35
31
14
12
22
5
17
10
11
34
42

Fig.7
10
11
12
13
14
17
22
31
32
33
34
35
36
37
38
39
40
41
42
43
44
45
46
47'
5
F

Fig. 8

Fig. 9
14
22
14
14
22
47'
12
5
14
22
5
22
17
43
44
42
43
44
36
35
11
31
10
13
46
5